(19) Europäisches Patentamt

European Patent Office

Office européen des brevets

(11) **EP 2 642 313 B1**

(12) **EUROPEAN PATENT SPECIFICATION**

(45) Date of publication and mention
of the grant of the patent:
**25.10.2017 Bulletin 2017/43**

(51) Int Cl.:
***G01S 5/06*** *(2006.01)* ***G01S 5/02*** *(2010.01)*

(21) Application number: **13160416.7**

(22) Date of filing: **21.03.2013**

(54) **Method and apparatus for tdoa-locating with reduced data rates**

Verfahren und Vorrichtung zur TDOA-Lokalisierung mit reduzierten Datenraten

Procédé et appareil pour localisation TDOA avec des débits de données réduits

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.03.2012 EP 12160631**

(43) Date of publication of application:
**25.09.2013 Bulletin 2013/39**

(73) Proprietor: **Saab Medav Technologies GmbH
91080 Uttenreuth (DE)**

(72) Inventors:
• **Kolb, Hans-Joachim
91080 Uttenreuth (DE)**
• **Kleschenkow, Alex
91080 Uttenreuth (DE)**
• **Warzügel, Steffen
91080 Uttenreuth (DE)**
• **Kolb, Dirk
91080 Uttenreuth (DE)**

(74) Representative: **Benedum, Ulrich Max et al
Nebens IP
Patente Marken Designs
Oberföhringer Strasse 172
81925 München (DE)**

(56) References cited:
**US-A- 5 327 144**      **US-A- 5 512 908**
**US-A1- 2008 089 393**      **US-A1- 2010 007 558**

**Description**

TECHNICAL FIELD

The invention relates to methods of finding the location of radio frequency emitters and equipment.

TECHNICAL BACKGROUND

In recent years TDOA-locating (TDOA = Time Difference Of Arrival) of cooperating and non-cooperating radio frequency emitters has become a well-established method for finding the location of known or unknown emitters of RF-signals. The development for locating the emitters of RF transmissions is also met by an increasing demand. Civil and military authorities wish to find the unknown locations of emitters of radio frequency, for example "radio hams" communicating in forbidden frequency bands or with a transmission power exceeding given thresholds, criminals that communicate with cellular phones or radiotelephones, emergency calls of persons using a cellular phone or transmitters of spies or hostile forces.

The various methods for locating emitters of radio frequency, for example Angle-Of-Arrival (AOA), Time-Of-Arrival (TOA) and Time-Difference-Of-Arrival (TDOA), all have benefits and drawbacks. For locating unknown and non-cooperating emitters, TOA cannot be used, because there is a need for an extremely precise synchronisation of clocks in the emitters and receivers. AOA uses the direction of arrival of the received signals. For locating there are needed at least two receiving stations with multiple antennas. Based on the direction of arrival of the received signals and the known positions of the receivers the unknown position of the emitter is calculated by triangulation. TDOA needs at least three receiving stations with known positions and synchronised clocks in the receivers. Based on the time differences of a single signal that is transmitted by the emitter and received at different times at the corresponding receivers, the unknown position of the emitter can be computed.

Regarding TDOA and AOA, the ITU-R Report SM.2211 (06/2011), "*Comparison of Time-Difference-of-Arrival and Angle-of-Arrival Methods of Signal Geolocations*" summarizes the state of the art and sets forth corresponding advantages and shortcomings. In short, the main TDOA-versus-AOA strengths are: simpler antenna requirements, simpler situation and calibration requirements and good performance for wideband, low-SNR signals and short duration signals. US 5,512,908 A (Herrick) and US 5,327,144 (Stilp et al) disclose methods for determining the TDOA of signals from cellular phones (GSM), the methods requiring a minimum bandwidth. US 2008/0167051 (Cheok et al) relates to a TDOA method for signals with an "ultra-wide band frequency". The main TDOA-versus-AOA weakness is dealing with narrowband signals. Slowly varying signals, which include unmodulated carriers and narrowband signals may be impossible or difficult to locate with TDOA techniques. US 2008/0089393 (Opperman) describes a method for radio signal positioning wherein the frequency of the signal must be known in advance. It is in particular an object to provide a method and devices for improving the precision of measurements in the area of travelling time differences of signals, particularly for narrowband signals at and below a frequency of 30 kHz, and this for regions with a limited communication infrastructure.

US 2010/007558 A1 discloses a system for identifying a source location of an electromagnetic signal having a known waveform. Radio receiving equipment located at three of more monitoring stations receives and demodulates a radio frequency signal from a common source. A time stamp generator applies a time stamp to each block of digital data samples derived from the received radio frequency signal at each monitoring station. A GPS timing signal is used to synchronize the time stamp generator in each monitoring station. A replica generator at each monitoring station periodically synchronously generates a replica waveform. An autocorrelation processor at each monitoring station determines a time offset between an occurrence of the known waveform in the signal, and an occurrence of the replica waveform.

SUMMARY OF THE INVENTION

This goal is achieved by a method for reducing the amount of data that is transmitted from the sensor devices to the processing centre of a Time-Difference-Of-Arrival locating system as specified in claim 1.

The timing reference may be a GPS-derived timing reference.

A further aspect of the disclosure relates to a TDOA method in which locating precision is improved by the steps of interpolating the values in each segment of the autocorrelation function with a number of interpolation values; fitting a continuous smooth curve to the neighbourhood of the maximum value of the interpolated autocorrelation function in each segment, the continuous smooth curve spanning the distances between the discrete values of the interpolated autocorrelation function; and calculating the maximum of the continuous smooth curve and taking this maximum as the maximum value of the autocorrelation function in this segment.

In a most preferred embodiment the interpolation of the discrete values of the autocorrelation function is done using a Farrow filter. The continuous smooth curve may be a parabolic curve. The autocorrelation function may be computed in the sensor devices.

Another aspect of the disclosure relates to a Time-Difference-Of-Arrival locating system according to claim 7.

The timing reference may be a GPS-derived timing reference.

A most preferred embodiment of the disclosed equipment comprises an interpolation means that interpolates the values in each segment of the autocorrelation function with a suitable number of interpolation values; a curve fitting means that fits a continuous smooth curve to the neighbourhood of the maximum value of the interpolated autocorrelation function in each segment, the continuous smooth curve spanning the distances between the discrete values of the interpolated autocorrelation function; and a maximum calculating means that calculates the maximum of the continuous smooth curve and takes this maximum as the maximum value of the autocorrelation function in this segment. In this embodiment, the interpolation means may be a Farrow filter. The continuous smooth curve that is used by the curve fitting means may be a parabolic curve. The autocorrelation function may be computed in the sensor devices.

The present invention is best understood when read in conjunction with the accompanying drawings and the examples, which serve to illustrate preferred embodiments of the disclosure. It is understood, however, that the invention is not limited to the specific embodiments described.

BRIEF DESCRIPTION OF THE DRAWINGS

In the accompanying drawing

Fig. 1 is a schematic drawing of a target and several sensors showing the principles of a two-dimensional TDOA location system;

Fig. 2 is a representation of the normalized amplitude of the autocorrelation function of an exemplary sampled signal versus time for several sensors, whereby the autocorrelation function is divided in segments of equal size and the maximum value in every segment is highlighted;

Fig. 3 is a representation of the normalized amplitude of the autocorrelation function of an exemplary sampled signal with a bandwidth of 20 kHz and a sampling rate of 25 kHz depicted for several sensors in the neighbourhood of the maximum value #4 in Fig. 2 in a magnified time scale;

Fig. 4 is a schematic layout of four sensors and a known target location showing the locating results for an exemplary signal with a bandwidth of 20 kHz and a sampling rate of 25 kHz without any measures for improving the accuracy;

Fig. 5 is a representation of the normalized amplitude of the autocorrelation function in Fig. 3 interpolated with an interpolation factor of 10;

Fig. 6 is a schematic layout of the improved detection accuracy for the scenario of Fig. 4 and an interpolation factor of 10 for the autocorrelation function according to Fig. 5;

Fig. 7 is a representation of the normalized amplitude of the autocorrelation function in Fig. 3 interpolated with an interpolation factor of 10 and with a continuous smooth curve fitted to the neighbourhood of the maximum value of the autocorrelation function;

Fig. 8 shows the improved detection accuracy for the scenario of Fig. 4, an interpolation factor of 10 for the autocorrelation function according to Fig. 5 and a continuous smooth curve fitted to the neighbourhood of the maximum value of the autocorrelation function according to Fig. 7;

Fig. 9 shows the normalized amplitude of the autocorrelation function in Fig. 3 without interpolation and a continuous smooth curve fitted to the neighbourhood of the maximum value of the autocorrelation function; and

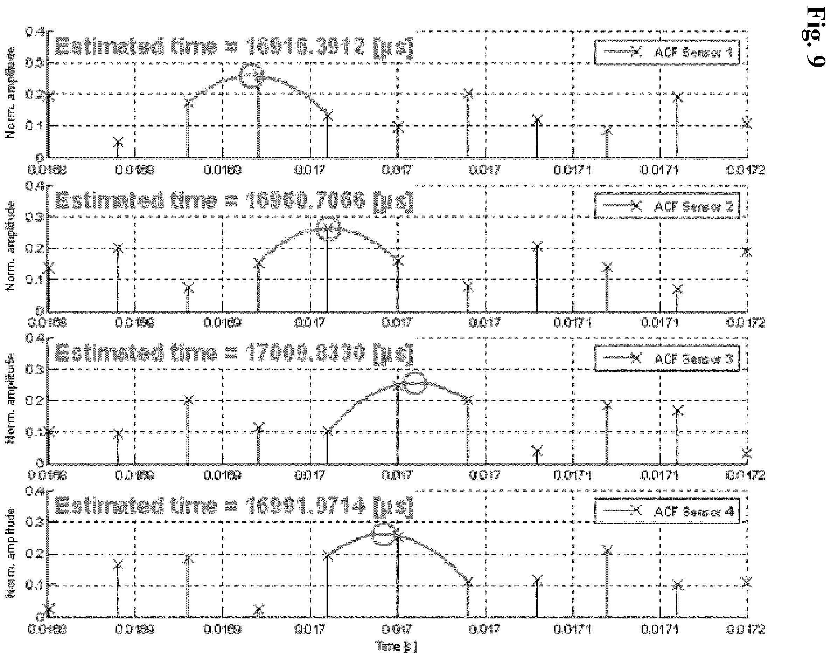

Fig. 10 shows the detection accuracy for the scenario of Fig. 4, no interpolation of the autocorrelation function according to Fig. 3 and a continuous smooth curve fitted

to the neighbourhood of the maximum value of the autocorrelation function according to Fig. 9.

DETAILED DESCRIPTION OF THE INVENTION

For a better understanding of the invention the main principles of locating emitters with TDOA methods will be explained by an example.

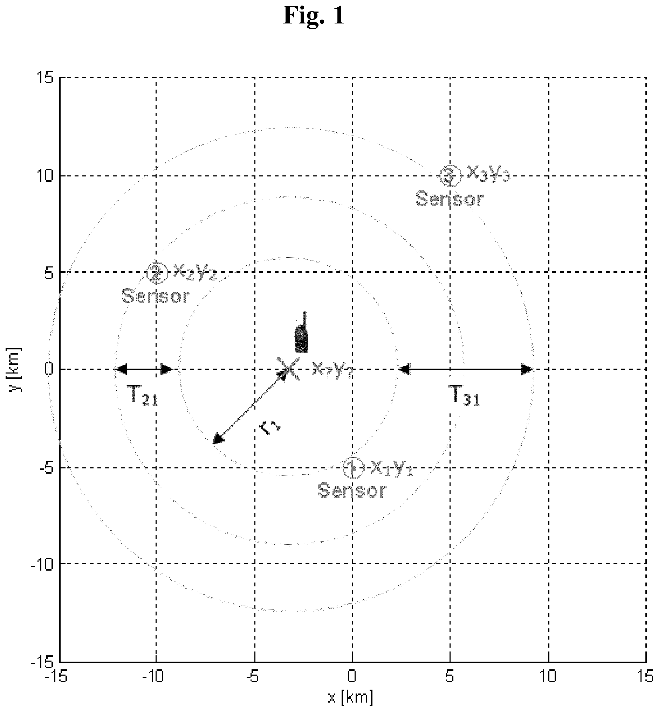

For ease of explanation, there is shown a two-dimensional scenario in an xy-plane, see Fig. 1. Fig. 1 is a schematic of a target and several sensors showing the principles of a two-dimensional TDOA location system. In the drawing there is a target (emitter of an RF-wave) with unknown coordinate values $(x, y)$ and three sensor devices (receivers of the RF-wave transmitted from the emitter) 1 - 3 with known coordinate values $(x_1, y_1)$, $(x_2, y_2)$ and $(x_3, y_3)$. Measuring the travelling time difference $T_{21}$ of the electromagnetic wave between sensor 2 and sensor 1 and the travelling time difference $T_{31}$ of the electromagnetic wave between sensor 3 and sensor 1 and converting these measured values by the speed of light to corresponding distances in space $m_{21}$ and $m_{31}$, respectively, the distance between the inner circle and the intermediate circle ($m_{21}$) and the distance between the inner circle and the outer circle ($m_{31}$) is known. Together with the unknown radius $r_1$ of the inner circle, the following equations are obtained:

$$(x - x_1)^2 + (y - y_1)^2 = r_1{}^2$$

$$(x - x_2)^2 + (y - y_2)^2 = (r_1 + m_{21})^2$$

$$(x - x_3)^2 + (y - y_3)^2 = (r_1 + m_{31})^2$$

By solving the above equations for the unknown variables x, y and $r_1$, the location of the target can be found. For dealing with scenarios in three-dimensional space a third coordinate z in a direction orthogonal to the xy-plane shown in Fig. 1 has to be introduced, an a fourth sensor is needed that provides a fourth equation for the new coordinate z.

In the following the prior art steps for obtaining the travelling time differences T needed to compute the position of the target are described. In a first step the signals arriving at each sensor are sampled and divided in segments of a suitable duration. The segments of the sampled signal are synchronized with a timing reference. At each sensor device a characterizing feature of the received signal that identifies the time of arrival of the received signal in a unique fashion is obtained. According to the prior art, for this characterizing feature the synchronized data segments of the signal itself are used. The characterizing feature of the received signal, that is the segment of the signal in prior art systems, is transmitted from each sensor device to the processing centre of the locating system.

At the processing centre the travelling time differences of the sensor signals are calculated from the times of arrival using the transmitted characterizing features thereof. According to the prior art, this is done by cross-correlating the sampled signal segments of each two sensors in a second step to obtain the cross-correlation functions of each two signal segments. The maximum values of the cross-correlation functions represent the travelling time differences T of the corresponding signals. The travelling time differences are extracted. Knowing these travelling time differences T, the values of $m_{21}$ and $m_{31}$ can be computed, and the above equation system may be solved for the unknown coordinates x and y.

According to the prior art the first step is done in the sensors. Each sensor device samples the arriving signal with a suitable sampling frequency and divides it in segments. The further processing steps are conducted at a processing centre common to all sensors and located remote from the sensor devices or at least remote from all but one of the sensor devices. To this end the sampled signal segments from the respective sensors have to be transmitted to the processing centre. The transmission channels may be wired data links or wireless RF-channels, because the sensor devices may be non-stationary moving sensor devices. Frequently the transmission channels are mobile telephone networks and/or internet data links.

Depending on the bandwidth of the signals sampled at each sensor and on the resolution (number of digits) of the sampled values there may be high data rates that must be transmitted from each sensor to the processing centre. Although the transferred data may be compressed before transmission and decompressed at the processing centre, the remaining amount of transmission data may require a high-capacity (broadband) transmission channel from the sensors to the processing centre, an adequate transceiver equipment in both the sensors and the processing centre and a powerful hard- and software for real-time data compression and decompression, respectively. These requirements increase the cost, the volume, the weight and the power consumption of the sensors. For undercover locating small and light-weight sensor devices are preferred, because they are easy to carry and to hide. Furthermore, in parts of the world the capacities of available data links for data transmission to the processing centre (mobile telephone networks, internet data links) are weak, and the performance of the locating system is impaired by this "bottleneck".

This deficiency is overcome by reducing the amount of data that must be transmitted from the TDOA-sensors to the processing centre while performing a locating procedure. This has also the beneficial effect, that the multiple mobile sensor devices may then be small, light-weight, cost-efficient and have a low power consumption as a transmission channel from the sensor devices to the processing centre with a smaller bandwidth may be used.

The present disclosure provides a TDOA-locating with significantly reduced data rates that have to be transmitted from the TDOA sensor devices to the central processing station of the TDOA equipment. More precisely, the disclosure provides a method and an equipment for TDOA-locating with a significantly reduced data rate that has to be transmitted from the TDOA sensor devices to the central processing station of the TDOA locating system.

To achieve the desired reduction of the transmitted data rates the inventors have examined the processing steps of known TDOA-methods and the possibilities to reduce the amount of data that must be transmitted from the TDOA-sensors to the processing centre while performing a locating procedure. In known TDOA-processing the characterizing features of the signals representing the time of arrival at the sensor devices are found by a procedure summarized as follows. The analogue time-domain signals received at each sensor are sampled with an appropriate sampling rate according to the sampling theorem. The sampled signals are grouped in data segments of equal length. The segments of the sampled signal are synchronized with a timing reference and transmitted to a processing centre. At the processing centre, corresponding data segments of each two sensors are cross-correlated. The maximum values of the resulting cross-correlation functions provide the travelling time differences of the investigated signal at the respective sensor devices. These travelling time differences are needed for further processing and finally for calculating the unknown location of the emitter. This means that a relatively small amount of information needed for further processing (the travelling time differences) is extracted from a huge amount of data (the data segments of the sampled signals). However, the huge amount of data must be transmitted from the sensor devices to the processing centre, since the corresponding calculations for finding the travelling time differences are done at the processing centre, where the signal segments from the respective sensor devices are collected.

The present disclosure provides a method to include the information needed for further processing by the processing centre in a smaller amount of data so that the transmitted data rates can be reduced. The method requires the identification of a suitable characterizing feature of the signals received at each sensor that characterizes the time of arrival of the signals of the unknown emitter at the sensor devices while requiring a smaller amount of data for transmission to the processing centre. To achieve this goal the sensor devices are synchronized with a timing reference. The analogue time domain signals received at each sensor are sampled at an appropriate sampling rate according to the sampling theorem, and divided into segments of equal length. For obtaining the desired data reduction, the autocorrelation function of the sampled signal for every segment is further computed at each sensor device. The inventors have found that the autocorrelation function already provides a unique pattern that fully characterizes the autocorrelated signal with respect to the time of arrival. In other words, the information needed to calculate the travelling time differences of the received signals at the processing centre can be generated using the autocorrelation functions of the signal segments instead of the signal segments themselves. Further, the inventors found that there is no need to use the complete autocorrelation function to obtain the information needed; instead, the desired travelling time differences can be calculated from some suitable characterizing values of the autocorrelation function in every selected segment.

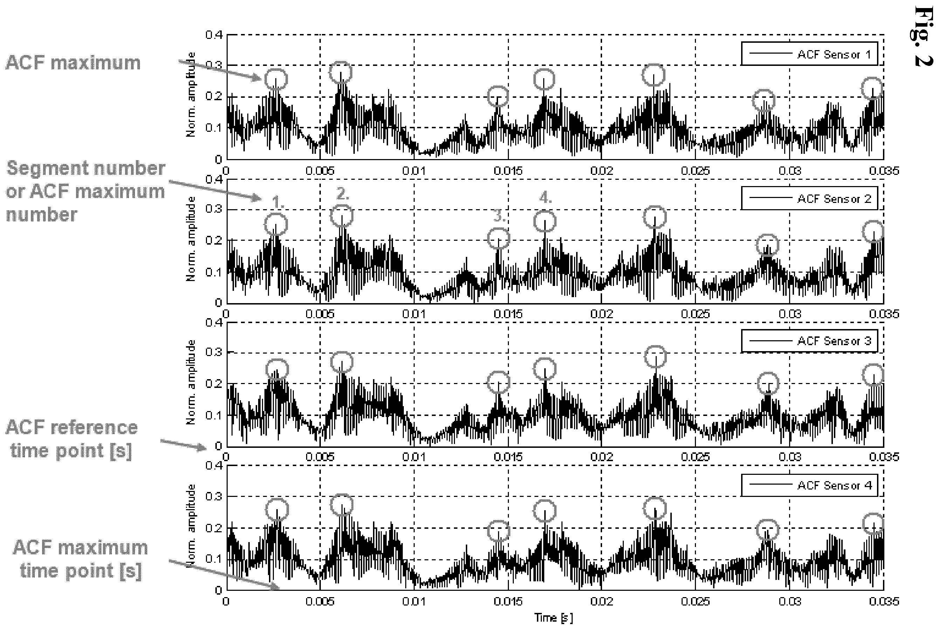

To this end, the autocorrelation function is divided in segments of equal size; see Fig. 2. Fig. 2 shows the normalized amplitude of the autocorrelation function of an exemplary sampled signal versus time for several sensor devices. The maximum values of the autocorrelation function in all segments are highlighted. The maximum value in each segment is located and the accurate position in time (time stamp) of the maximum value is extracted. The time stamps of the maximum values in all segments of the autocorrelation function are transmitted from each sensor device to the processing centre. At the processing centre, the required travelling time differences are obtained by simply computing the time differences of corresponding time stamps. Thus the transmission of a large amount of sampled signal data from the respective sensors to the processing centre is substituted by simply transferring a sequence of time stamps to the processing centre, requiring a much lower amount of data and a significantly smaller bandwidth.

The segments of the autocorrelation function may be synchronized with a GPS-derived timing reference, and the time stamps may be generated based on this reference.

The locating precision of the method of the invention for narrowband signals can further be improved by the following steps: (i) The values in each segment of the autocorrelation function may be interpolated with an appropriate number of interpolation values. The interpolation of the autocorrelation function may be done using a Farrow filter. (ii) A continuous smooth curve may be fitted to the neighbourhood of the maximum value of the interpolated autocorrelation function in each segment, the continuous smooth curve spanning the distances between the discrete values of the interpolated autocorrelation function. The maximum of the continuous smooth curve in each segment is then calculated and this maximum taken as the maximum value of the autocorrelation function in this segment. The continuous smooth curve fitted to the neighbourhood of the maximum value of the interpolated autocorrelation function in each segment may be a parabolic curve.

It should be noted that the computations for determining the characterizing feature of the time of arrival of the investigated signal can be done in or by each sensor device (the position in time of the maximum values of the autocorrelation function in the respective segments).

EXAMPLE

An embodiment of the invention will now be described with reference to the accompanying drawings and based on an illustrative example. The processing of the signal data in each sensor device will be explained. Since there are no substantial differences between the sensors, the procedures are described for one sensor only. It is understood that the description also refers to the other sensor devices of the locating system.

According to the method of the invention a characterizing feature of the arrival time of the RF-signal of the unknown emitter at the sensor device is computed. To do this, the sensor devices are synchronized with a timing reference, the received (complex) time domain signal is sampled with an appropriate sampling rate according to its bandwidth. The sampled signal is divided into segments of a suitable length, and the autocorrelation function of the signal segments is calculated for every segment.

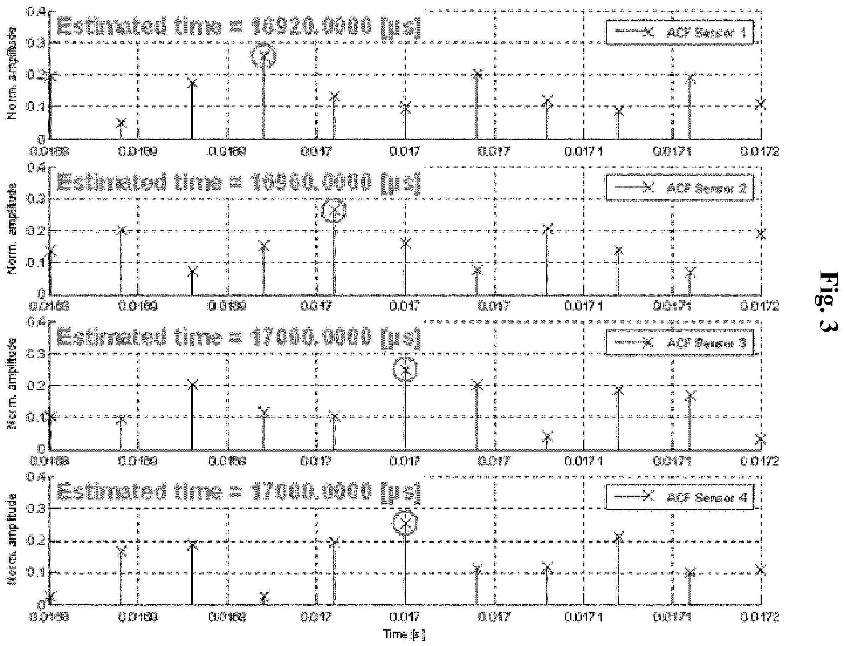

If corresponding segments of the autocorrelation function (segments referring to the same time interval) computed at different sensor devices are compared, it can be seen that corresponding autocorrelation function segments provide substantially the same pattern just translated in the direction of time by the time difference of arrival of the RF-signal at the sensors, see Fig. 2. In Fig. 2 corresponding autocorrelation function segments from different sensor devices are depicted one over the other, and the similar patterns in corresponding segments are obvious. According to the time scale used in Fig. 2, the translation in time of corresponding segments is so small that it cannot be seen. In Fig. 3, a magnified time scale is used. Fig. 3 shows the normalized amplitude of the autocorrelation function for several sensors (corresponding segments) in the neighbourhood of the maximum value #4 in Fig. 2 in a magnified time scale. In Fig. 3, the translation in time of corresponding segments is clearly depicted.

Therefore, selecting values or combinations of values or parts of the autocorrelation pattern characterizing the position of the unique pattern of the autocorrelation function segments in the direction of time provides the needed characterizing feature of the time of arrival. The inventors have chosen the times of occurrence of the maximum values in the segments of the autocorrelation function for this feature, because they are easy to compute and unmistakeable, but other selections may be possible. Therefore, finally the time stamps (position in time) of the maximum values of the autocorrelation function in each segment are extracted, providing the needed feature that uniquely characterizes the time of arrival of the investigated signal.

If the received signal is a narrowband signal (in this disclosure signals with a bandwidth of less than 30 kHz are referred to as narrowband signals) there is a problem that the accuracy of the locating results computed for the narrowband signal is very poor. The reason for this problem and the counter measures of the invention taken for improving the accuracy are described in detail now.

The illustrative example used to explain this embodiment of the invention is the locating procedure for an emitter of a narrowband signal that shows the principles of the invention and the problems of locating precision arising with this type of signals. The used exemplary narrowband signal has a bandwidth of 20 kHz and is sampled with a sampling rate of 25 kHz. This means that the time difference between two samples of the signal is 1/25 kHz = 40 $\mu$s. Autocorrelating this sampled signal having a time difference of 40 $\mu$s between the sampled values results in a discrete autocorrelation function having values every 40 $\mu$s, see Fig. 3.

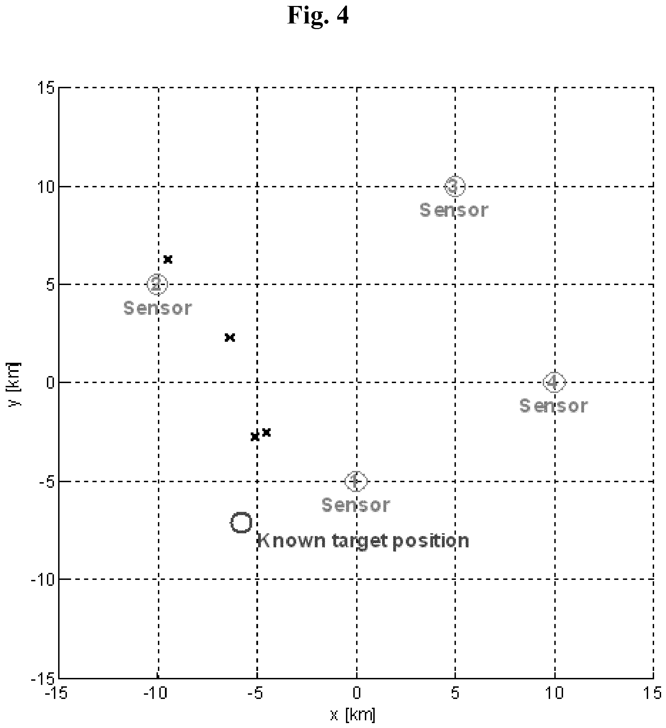

Therefore, the inaccuracy of the maximum value of the autocorrelation function within a segment is about $\pm20$ $\mu$s. This is equal to a travelling distance of the RF-wave of $\pm6$ km. Fig. 4 shows the locating results for the above example. Fig. 4 is a schematic layout of four sensors and a known target location showing the locating results for the signal of the example without any measures for improving the accuracy. In Fig. 4 the sensor positions are marked with red (light grey) circles. A few measurement results for the emitter position obtained in some measuring cycles can be seen marked with black crosses. The precise previously known location of the emitter is marked with a blue (dark grey) circle. As can be seen from Fig. 4, the difference of the calculated results from the known target position is in the range of several kilometres. In most cases this will be an unacceptable result for locating the emitter of an RF-wave.

The reason for this effect is the sampling raster or resolution of the sensor signals that is restricted to discrete values according to the sampling theorem and leads to a very coarse resolution of the autocorrelation function as seen above. Looking at Fig. 3 shows that a more precise value for the maximum of the autocorrelation function can be expected at the left side of the maximum value, but intermediate values are not known and cannot be calculated based on the given sampling scheme. Therefore, what is needed is a method to improve the precision of the maximum value of the autocorrelation function within a segment.

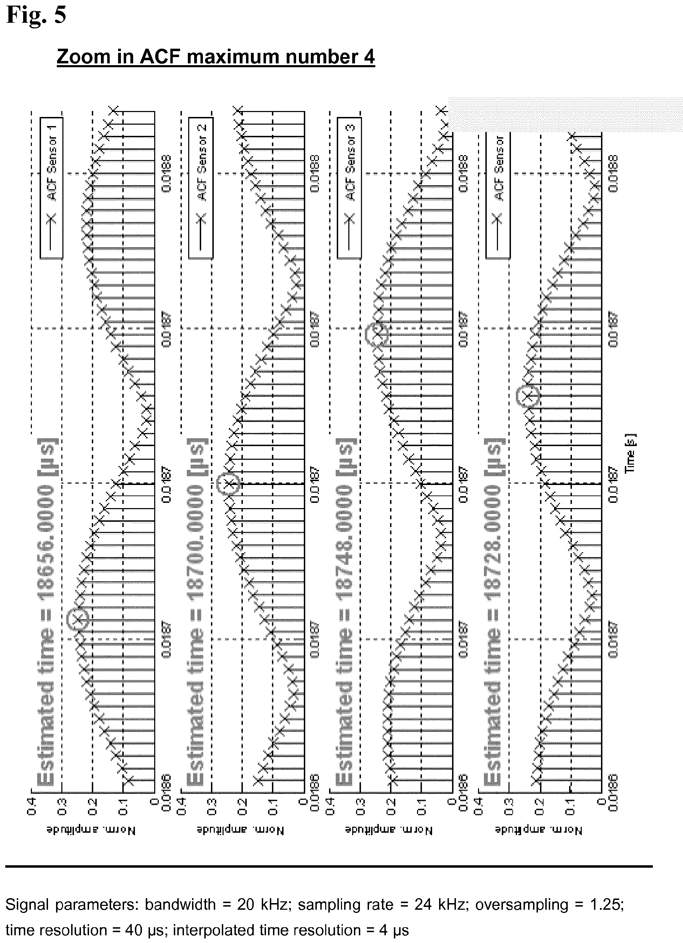

To this end, in a first step the data of the autocorrelation function are interpolated by a suitable number of interpolation values. In the above example an interpolation with a factor of 10 leads to a time difference of 4 $\mu$s between the interpolated values of the autocorrelation function, see Fig. 5. Fig. 5 shows the normalized amplitude of the autocorrelation function in Fig. 3 interpolated with an interpolation factor of 10. This means that the resolution of the autocorrelation function is also improved by a factor of 10. The maximum value of the autocorrelation function in each segment may thus be calculated with much higher precision as can be seen from Fig. 5. The inaccuracy of the maximum value of the autocorrelation function is also improved in the order of about 10. Interpolating the autocorrelation function calculated from the sampled time signals thus leads to a significant improvement of the accuracy of the maximum value of the autocorrelation function in each segment.

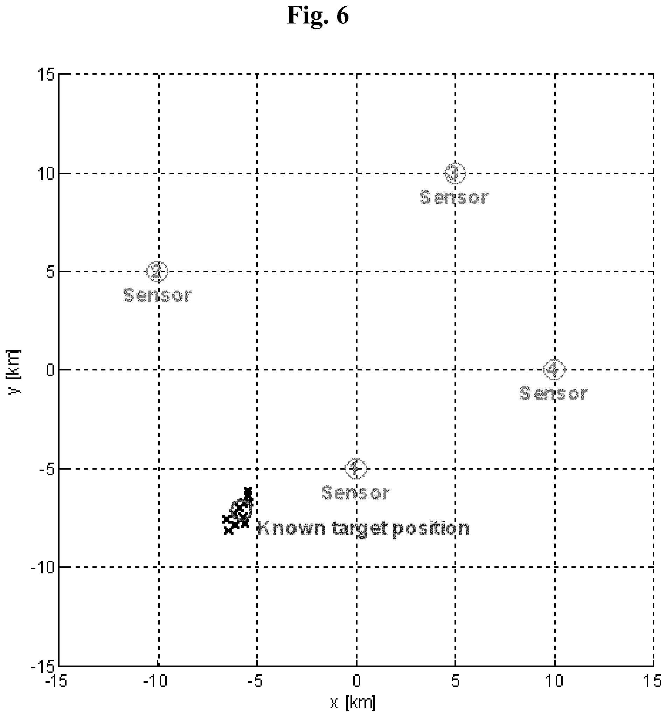

The detection accuracy obtained with the interpolated autocorrelation function of the above example is shown in Fig. 6. Fig. 6 shows the improved detection accuracy for the scenario of Fig. 4 and an interpolation factor of 10 for the autocorrelation function according to Fig. 5. As can be seen from Fig. 6 there is a drastic improvement of the locating precision, the difference of the calculated results from the known target position now being in the range of several hundred metres.

This result suggests increasing the interpolation factors to values as big as needed for the desired resolution will say locating precision. However, this is not feasible; the accuracy of the results cannot be improved without limits by increasing the interpolation factors. It is to be kept in mind that the interpolated values are not the precise (unknown) samples of an analogue signal and that the interpolated values themselves have some uncertainty resulting from the interpolation method. This means that increasing the interpolation factors beyond a threshold (that may depend on the details of the problem and the processing) does not further improve the accuracy of the autocorrelation function; the only thing that increases is the computational effort.

Practical values for the interpolation factors have been found empirically. Experience has shown that the algorithm of the inventors for processing narrowband signals performs best with interpolation factors for the autocorrelation function of about 10. However, the invention is not limited to a specific interpolation factor of about 10. Depending on the nature of the processed signals and the problem bigger or smaller interpolation factors may be suitable.

Thus the above interpolation procedure itself does not provide a desired accuracy of the locating results in the range of some ten metres, but it is a good basis for further improving the precision of the locating results.

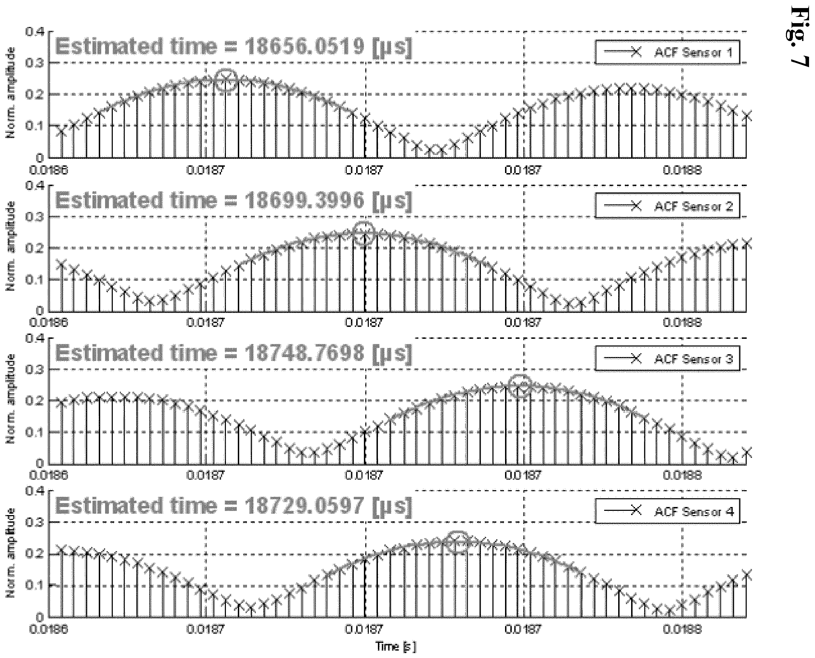

In a second step, the inventors conceived a way to further improve the resolution of the autocorrelation function. Recognizing that a further improvement in accuracy by increasing the interpolation factor beyond a threshold value is not possible and that the reason for the limited resolution of the autocorrelation function is the discrete nature of the autocorrelation function, in other words the time difference between two discrete values in the autocorrelation function (an interval with unknown values), the inventors developed a method for overcoming the limited resolution of the autocorrelation function in these cases. To this end, in each segment a continuous smooth curve, for example a second or higher order parabolic curve or a compensation spline that spans the distances between the discrete values, is fitted to the autocorrelation function in the neighbourhood of the maximum value. In general the maximum of the continuous smooth curve fitted to the autocorrelation function does not lie on one of the discrete values of the autocorrelation function but can be found anywhere between two values. Fig. 7 shows the interpolated autocorrelation function of Fig. 5 together with a continuous smooth curve fitted to the neighbourhood of the maximum value of the autocorrelation function. Calculating the maximum of the continuous smooth curve, a final value for the maximum of the autocorrelation function in the respective segment can be obtained. Testing again the method of the invention for the above example has shown that the maximum values obtained in this way greatly improve the accuracy of the result, in some cases up to a range of some ten metres.

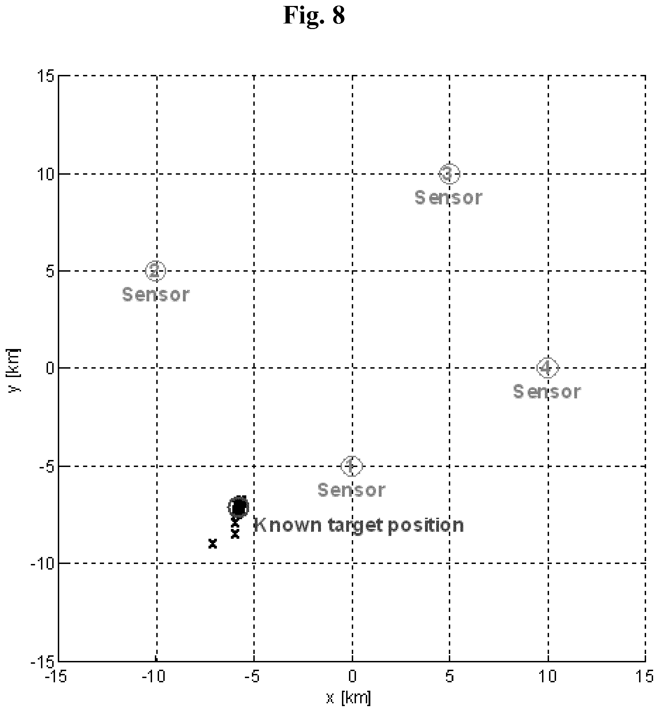

Results corresponding to the curve fitting processing in Fig. 7 are shown in Fig. 8. Fig. 8 shows the improved detection accuracy for the scenario of Fig. 4, an interpolation factor of 10 for the autocorrelation function according to Fig. 5 and a continuous smooth curve fitted to the neighbourhood of the maximum value of the interpolated autocorrelation function according to Fig. 7. As can be seen from Fig. 8, for some of the resulting values the difference of the known position and the measured positions of the emitter is so small that it can hardly be seen in the drawing. In practice this corresponds to less than 30 metres, as described above, so that the TDOA location method of the invention can be successfully used even in an urban environment. For most cases this seems to be a satisfying result.

However, it is not possible to obtain the precise results according to Fig. 8 by using only one of the described procedures for improving the precision of the results. Using just the interpolation method according to Fig. 5 is described above and provides the results shown in Fig. 6. As stated above, the locating precision is substantially improved, but it does not match the desired range of some ten meters.

If only the curve fitting procedure explained before according to Fig. 7 is used without a previous interpolation of the autocorrelation function, the following results are obtained.

The fitting of a smooth continuous curve to the autocorrelation function of Fig. 3 without interpolating the autocorrelation function in advance is depicted in Fig. 9.

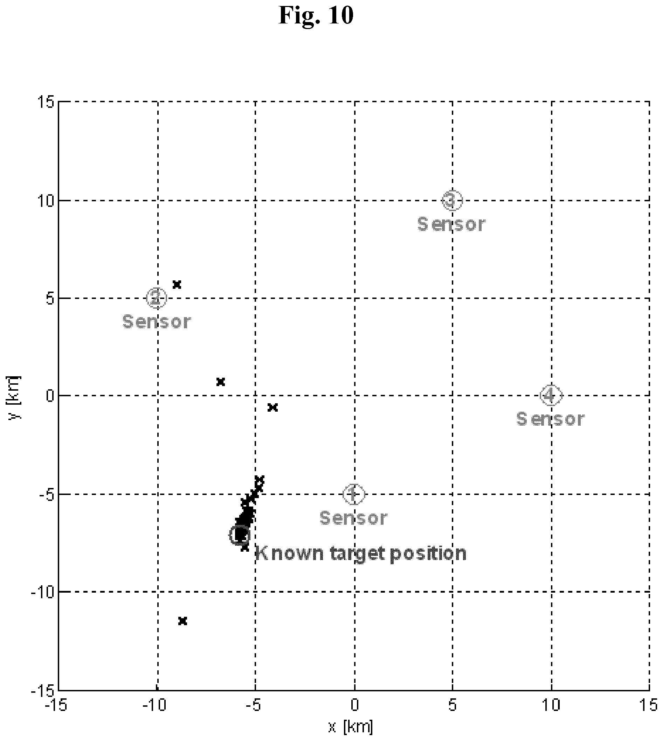

Fig. 9 shows the normalized amplitude of the autocorrelation function in Fig. 3 without interpolation and a continuous smooth curve fitted to the neighbourhood of the maximum value of the autocorrelation function. The maximum value of the continuous smooth curve is derived as described above. The locating results obtained using only the curve fitting processing are shown in Fig. 10. Fig. 10 shows the detection accuracy for the scenario of Fig. 4, no interpolation of the autocorrelation function according to Fig. 3 and a continuous smooth curve fitted to the neighbourhood of the maximum value of the autocorrelation function. As can be seen from Fig. 10, most of the computed results do not have the accuracy of the results in Fig. 8. Further, some of the results show large deviations in the range of several kilometres.

This means that accurate locating results cannot be obtained only by fitting a smooth curve to the maximum values of the autocorrelation function. To get satisfying results neither the interpolation procedure nor the curve fitting procedure may be omitted.

Finally the reduction of the date rates that must be transmitted from the sensor devices to the processing centre is quantified for the above example. Let there be the exemplary time domain signal used above with a sampling frequency of 25 kHz and a signal duration of 0,2 seconds for measurement purposes. If a prior art TDOA locating method is used, the sampled values of the complex time domain signal must be transmitted from the sensor device to the processing centre. This means that 5000 complex (or 10000 real) floating point values have to be transmitted within the signal duration. If the method of the invention is used and if it is supposed that the segments of the autocorrelation function have a duration of 5 milliseconds, there are 40 segments within the measurement signal duration. For every segment one time stamp (one floating point value) has to be transferred. Therefore, the data rate of the invention vis-a-vis the prior art is (40 floating point values)/(10000 floating point values) = 0,4 percent. This also means that the bandwidth savings on the data link from the sensors to the processing centre may be more than 99 percent (depending on the configuration of the data link).

**Claims**

1. Method for reducing the amount of data that is transmitted from the sensor devices to the processing centre of a Time-Difference-Of-Arrival locating system, whereby the locating system is used to obtain the unknown location of a radio frequency emitter, the method comprising the steps of:

receiving the radio frequency signal of the emitter at the sensor devices of the locating system; at each sensor device obtaining a feature of the received signal that identifies the time of arrival of the received signal in a unique fashion; transmitting the obtained features from all sensor devices to the processing centre of the locating system; and at the processing centre calculating the unknown location of the radio frequency emitter using the obtained features of the times of arrival from all sensor devices; **characterised in that** the obtained feature of the received signal that describes the time of arrival of the received signal at each sensor device in a unique fashion is the times of occurrence of the maximum values in each segment of the autocorrelation function of the received signal, wherein the signal of the radio frequency emitter received at each sensor device is sampled with a suitable sampling frequency according to the sampling theorem and the autocorrelation function of the received signal is computed from the sampled signal, the autocorrelation function therefore being a discrete autocorrelation function; wherein the step of sampling the signals includes synchronizing the signal samples at the different sensor devices with a timing reference; and wherein the discrete autocorrelation function is computed for segments of the sampled signal, this procedure providing segments of the autocorrelation function, and the timing reference is also used for synchronizing the segments of the autocorrelation function.

2. The method according to claim 1, wherein the timing reference is a GPS-derived timing reference.

3. The method according to claim 1 or claim 2, wherein the locating precision of the method is improved by the steps of:

interpolating the values in each segment of the autocorrelation function with a number of interpolation values; fitting a continuous smooth curve to the neighbourhood of the maximum value of the interpolated autocorrelation function in each segment, the continuous smooth curve spanning the distances between the discrete values of the interpolated autocorrelation function; and calculating the maximum of the continuous smooth curve and taking this maximum as the maximum value of the autocorrelation function in this segment.

4. The method according to claim 3, wherein the interpolation of the discrete values of the autocorrelation function is done using a Farrow filter.

5. The method according to claim 3, wherein the continuous smooth curve is a parabolic curve.

6. The method according to any of claims 1 to 5, wherein the autocorrelation function is computed in the sensor devices.

7. The method according to any preceding claim, wherein the timing reference is a GPS-derived timing reference.

8. Time-Difference-Of-Arrival locating system which is used to obtain the unknown location of a radio frequency emitter, whereby the amount of data that must be transmitted from the sensor devices of the locating system to the processing centre of the locating system is greatly reduced, the system comprising:

sensor devices arranged remote from one another that receive the radio frequency signal of the emitter at different times; at each sensor device means configured to obtain a feature of the received signal that identifies the time of arrival of the received signal in a unique fashion; transceiver means at the sensor devices and the processing centre configured to transmit the obtained features from all sensor devices to the processing centre of the locating system; and at the processing centre means configured to calculate the unknown location of the radio frequency emitter using the obtained features of the times of arrival from all sensor devices, **characterised in that** the obtained feature of the received signal that describes the time of arrival of the received signal at each sensor device in a unique fashion is the times of occurrence of the maximum values in each segment of the autocorrelation function of the received signals, which is computed in the sensor devices,

wherein the autocorrelation function is a discrete autocorrelation function that is derived from the signals received at the sensor devices that are sampled with a suitable sampling frequency according to the sampling theorem;
wherein the signal samples at the different sensor devices are synchronized with a timing reference; and
wherein the discrete autocorrelation function is computed for segments of the sampled signal, this procedure providing segments of the autocorrelation function, and the timing reference is also used for synchronizing the segments of the autocorrelation function.

9. The system according to claim 8, wherein the locating precision of the system is improved by comprising:

an interpolation means configured to interpolate the values in each segment of the autocorrelation function with a number of interpolation values;
a curve fitting means configured to fit a continuous smooth curve to the neighbourhood of the maximum value of the interpolated autocorrelation function in each segment, the continuous smooth curve spanning the distances between the discrete values of the interpolated autocorrelation function; and
a maximum calculating means configured to calculate the maximum of the continuous smooth curve and to take this maximum as the maximum value of the autocorrelation function in this segment.

10. The system according to claim 9, wherein the interpolation means is a Farrow filter.

11. The system according to claim 9, wherein the continuous smooth curve that is used by the curve fitting means is a parabolic curve.

12. The system according to any of claims 8 to 11, wherein the timing reference is a GPS-derived timing reference.

**Patentansprüche**

1. Verfahren zum Verringern der Datenmenge, die von den Sensorvorrichtungen zum Verarbeitungszentrum eines Ortungssystems übertragen wird, das mit der Differenz der Ankunftszeiten arbeitet, wobei das Ortungssystem zum Ermitteln des unbekannten Standorts eines Hochfrequenzemitters verwendet wird, und das Verfahren die Schritte umfasst:

das Empfangen des Hochfrequenzsignals des Emitters an den Sensorvorrichtungen des Ortungssystems;
an jeder Sensorvorrichtung das Gewinnen eines Merkmals des empfangenen Signals, das die Ankunftszeit des empfangenen Signals in eindeutiger Weise kennzeichnet;
das Übertragen der gewonnenen Merkmale von allen Sensorvorrichtungen an das Verarbeitungszentrum des Ortungssystems; und
im Verarbeitungszentrum das Berechnen des unbekannten Orts des Hochfrequenzemitters mit Hilfe der gewonnenen Merkmale der Ankunftszeiten von allen Sensorvorrichtungen;
**dadurch gekennzeichnet, dass** das gewonnene Merkmal des empfangen Signals, das die Ankunftszeit des empfangenen Signals an jeder Sensorvorrichtung in eindeutiger Weise beschreibt, die Zeiten des Auftretens des Maximalwerts in jedem Segment der Autokorrelationsfunktion des empfangenen Signals sind,
wobei das Signal des an jeder Sensorvorrichtung empfangenen Hochfrequenzemitters mit einer geeigneten Abtastfrequenz gemäß dem Abtasttheorem abgetastet wird, und die Autokorrelationsfunktion des empfangenen Signals aus dem abgetasteten Signal berechnet wird und die Autokorrelationsfunktion daher eine diskrete Autokorrelationsfunktion ist;
wobei der Schritt des Abtastens der Signale das Synchronisieren der Signalabtastwerte an den verschiedenen Sensorvorrichtungen mit einer Zeitreferenz umfasst; und
wobei die diskrete Autokorrelationsfunktion für Segmente des abgetasteten Signals berechnet wird, und diese Prozedur Segmente der Autokorrelationsfunktion liefert, und die Zeitreferenz auch zum Synchronisieren der Segmente der Autokorrelationsfunktion verwendet wird.

2. Verfahren nach Anspruch 1, wobei die Zeitreferenz eine GPS-gestützte Zeitreferenz ist.

3. Verfahren nach Anspruch 1 oder Anspruch 2, wobei die Ortungsgenauigkeit des Verfahrens durch die folgenden Schritte verbessert wird:

das Interpolieren der Werte in jedem Segment der Autokorrelationsfunktion mit einer Anzahl Interpolationswerte;
das Anpassen einer kontinuierlichen glatten Kurve in der Umgebung des Maximalwerts der interpolierten Autokorrelationsfunktion in jedem Segment, wobei die kontinuierliche glatte Kurve die Abstände zwischen den diskreten Werten der interpolierten Autokorrelationsfunktion überbrückt; und

das Berechnen des Maximalwerts der kontinuierlichen glatten Kurve, wobei dieses Maximum als Maximalwert der Autokorrelationsfunktion in diesem Segment genommen wird.

4. Verfahren nach Anspruch 3, wobei das Interpolieren der diskreten Werte der Autokorrelationsfunktion mit Hilfe eines Farrow-Filters vorgenommen wird.

5. Verfahren nach Anspruch 3, wobei die kontinuierliche glatte Kurve eine parabolische Kurve ist.

6. Verfahren nach irgendeinem der Ansprüche 1 bis 5, wobei die Autokorrelationsfunktion in den Sensorvorrichtungen berechnet wird.

7. Verfahren nach irgendeinem vorhergehenden Anspruch, wobei die Zeitreferenz eine GPS-gestützte Zeitreferenz ist.

8. Ortungssystem, das mit der Differenz der Ankunftszeiten arbeitet und dazu verwendet wird, den unbekannten Standort eines Hochfrequenzemitters zu bestimmen, wobei die Datenmenge, die von den Sensorvorrichtungen des Ortungssystems zum Verarbeitungszentrum des Ortungssystems übertragen werden muss, stark verringert ist, umfassend:

Sensorvorrichtungen, die entfernt voneinander angeordnet sind und die Hochfrequenzsignale des Emitters zu unterschiedlichen Zeitpunkten empfangen;
an jeder Sensorvorrichtung Mittel, die dafür ausgelegt sind, ein Merkmal des empfangenen Signals zu gewinnen, das die Ankunftszeit des empfangenen Signals in eindeutiger Weise kennzeichnet;
Transceivervorrichtungen an den Sensorvorrichtungen und dem Verarbeitungszentrum, die dafür eingerichtet sind, die gewonnenen Merkmale von allen Sensorvorrichtungen zum Verarbeitungszentrum des Ortungssystems zu übertragen; und
im Verarbeitungszentrum Mittel, die dafür ausgelegt sind, den unbekannten Standort des Hochfrequenzemitters mit Hilfe der gewonnenen Merkmale der Ankunftszeiten von allen Sensorvorrichtungen zu berechnen,
**dadurch gekennzeichnet, dass** das gewonnene Merkmal des empfangenen Signals, das die Ankunftszeit des empfangenen Signals an jeder Sensorvorrichtung in eindeutiger Weise beschreibt, die Zeiten des Auftretens des Maximalwerts in jedem Segment der Autokorrelationsfunktion des empfangenen Signals sind, die in den Sensorvorrichtungen berechnet wird,
wobei die Autokorrelationsfunktion eine diskrete Autokorrelationsfunktion ist, die aus den an den Sensorvorrichtungen empfangenen Signalen gewonnen wird, die mit einer geeigneten Abtastfrequenz gemäß dem Abtasttheorem abgetastet werden;
wobei die Signalabtastwerte an den jeweiligen Sensorvorrichtungen mit einer Zeitreferenz synchronisiert werden; und
wobei die diskrete Autokorrelationsfunktion für Segmente des abgetasteten Signals berechnet wird, und diese Prozedur Segmente der Autokorrelationsfunktion liefert, und die Zeitreferenz auch zum Synchronisieren der Segmente der Autokorrelationsfunktion verwendet wird.

9. System nach Anspruch 8, wobei die Ortungsgenauigkeit des Systems dadurch verbessert wird, dass es enthält:

eine Interpoliervorrichtung, die die Werte in jedem Segment der Autokorrelationsfunktion mit einer Anzahl Interpolationswerte interpoliert;
eine Kurvenanpassvorrichtung, die eine kontinuierliche glatte Kurve durch die Umgebung des Maximalwerts der interpolierten Autokorrelationsfunktion in jedem Segment legt, wobei die kontinuierliche glatte Kurve die Abstände zwischen den diskreten Werten der interpolierten Autokorrelationsfunktion überbrückt; und
eine Maximum-Berechnungsvorrichtung, die das Maximum der kontinuierlichen glatten Kurve berechnet, wobei dieses Maximum als Maximalwert der Autokorrelationsfunktion in diesem Segment genommen wird.

10. System nach Anspruch 9, wobei die Interpoliervorrichtung ein Farrow-Filter ist.

11. System nach Anspruch 9, wobei die kontinuierliche glatte Kurve, die von der Kurvenanpassvorrichtung verwendet wird, eine parabolische Kurve ist.

12. System nach irgendeinem der Ansprüche 8 bis 11, wobei die Zeitreferenz eine GPS-gestützte Zeitreferenz ist.

**Revendications**

1. Procédé pour réduire la quantité de données qui est transmise des dispositifs détecteurs vers le centre de traitement d'un système de localisation par différence de moment d'arrivée, moyennant quoi le système de localisation est utilisé pour obtenir la localisation inconnue d'un émetteur de radiofréquences, le procédé comprenant les étapes consistant à :

recevoir le signal de radiofréquence de l'émetteur au niveau des dispositifs détecteurs du système de localisation ;

au niveau de chaque dispositif détecteur, obtenir une caractéristique du signal reçu qui identifie le moment d'arrivée du signal reçu de manière unique ;

transmettre les caractéristiques obtenues de tous les dispositifs détecteurs vers le centre de traitement du système de localisation ; et

au centre de traitement, calculer la localisation inconnue de l'émetteur de radiofréquences en utilisant les caractéristiques obtenues des moments d'arrivée provenant de tous les dispositifs détecteurs ;

**caractérisé en ce que** les caractéristiques obtenues du signal reçu qui décrit le moment d'arrivée du signal reçu à chaque dispositif détecteur de manière unique sont les moments de survenue des valeurs maximales dans chaque segment de la fonction d'autocorrélation du signal reçu,

dans lequel le signal de l'émetteur de radiofréquences reçu à chaque dispositif détecteur est échantillonné avec une fréquence d'échantillonnage appropriée selon le théorème d'échantillonnage et la fonction d'autocorrélation du signal reçu est calculée à partir du signal échantillonné, la fonction d'autocorrélation étant pour cette raison une fonction d'autocorrélation discrète ;

dans lequel l'étape d'échantillonnage des signaux comprend la synchronisation des échantillons de signal au niveau des différents dispositifs détecteurs avec une référence temporelle ; et

dans lequel la fonction d'autocorrélation discrète est calculée pour des segments du signal échantillonné, cette procédure fournissant des segments de la fonction d'autocorrélation, et la référence temporelle est également utilisée pour synchroniser les segments de la fonction d'autocorrélation.

2. Procédé selon la revendication 1, dans lequel la référence temporelle est une référence temporelle dérivée de GPS.

3. Procédé selon la revendication 1 ou la revendication 2, dans lequel la précision de localisation du procédé est améliorée par les étapes consistant à :

interpoler les valeurs dans chaque segment de la fonction d'autocorrélation avec un certain nombre de valeurs d'interpolation ;

ajuster une courbe lisse continue au voisinage de la valeur maximale de la fonction d'autocorrélation interpolée dans chaque segment, la courbe lisse continue couvrant les distances entre les valeurs discrètes de la fonction d'autocorrélation interpolée ; et

calculer le maximum de la courbe lisse continue et prendre ce maximum comme valeur maximale de la fonction d'autocorrélation dans ce segment.

4. Procédé selon la revendication 3, dans lequel l'interpolation des valeurs discrètes de la fonction d'autocorrélation est faite en utilisant un filtre de Farrow.

5. Procédé selon la revendication 3, dans lequel la courbe lisse continue est une courbe parabolique.

6. Procédé selon l'une quelconque des revendications 1 à 5, dans lequel la fonction d'autocorrélation est calculée dans les dispositifs détecteurs.

7. Procédé selon l'une quelconque revendication précédente, dans lequel la référence temporelle est une référence temporelle dérivée de GPS.

8. Système de localisation par différence de moment d'arrivée, qui est utilisé pour obtenir la localisation inconnue d'un émetteur de radiofréquences, moyennant quoi la quantité de données qui doit être transmise des dispositifs détecteurs du système de localisation au centre de traitement du système de localisation est fortement réduite, le système comprenant :

des dispositifs détecteurs disposés à distance les uns des autres, lesquels reçoivent le signal de radiofréquence de l'émetteur à des moments différents ;

à chaque dispositif détecteur, un moyen configuré pour obtenir une caractéristique du signal reçu qui identifie le moment d'arrivée du signal reçu de manière unique ;

un moyen émetteur-récepteur au niveau des dispositifs détecteurs et du centre de traitement, configuré pour transmettre les caractéristiques obtenues de tous les dispositifs détecteurs vers le centre de traitement du système de localisation ; et

au centre de traitement, un moyen configuré pour calculer la localisation inconnue de l'émetteur de radiofréquences en utilisant les caractéristiques obtenues des moments d'arrivée provenant de tous les dispositifs détecteurs ;

**caractérisé en ce que** les caractéristiques obtenues du signal reçu qui décrivent le moment d'arrivée du signal reçu à chaque dispositif détecteur de manière unique sont les moments de survenue des valeurs maximales dans chaque segment de la fonction d'autocorrélation des signaux reçus, qui est calculée dans les dispositifs détecteurs,

dans lequel la fonction d'autocorrélation est une fonction d'autocorrélation discrète qui est dérivée des signaux reçus au niveau des dispositifs détecteurs qui sont échantillonnés avec une fréquence d'échantillonnage appropriée selon le théorème d'échantillonnage ;

dans lequel les échantillons de signal au niveau des différents dispositifs détecteurs sont synchronisés avec une référence temporelle ; et

dans lequel la fonction d'autocorrélation discrète est calculée pour des segments du signal échantillonné, cette procédure fournissant des segments de la fonction d'autocorrélation, et la référence temporelle est également utilisée pour synchroniser les segments de la fonction d'autocorrélation.

9. Système selon la revendication 8, dans lequel la précision de localisation du système est améliorée en ce qu'il comprend :

un moyen d'interpolation configuré pour interpoler les valeurs dans chaque segment de la fonction d'autocorrélation avec un certain nombre de valeurs d'interpolation ;

un moyen d'ajustement de courbe configuré pour ajuster une courbe lisse continue au voisinage de la valeur maximale de la fonction d'autocorrélation interpolée dans chaque segment, la courbe lisse continue couvrant les distances entre les valeurs discrètes de la fonction d'autocorrélation interpolée ; et

un moyen de calcul de maximum configuré pour calculer le maximum de la courbe lisse continue et pour prendre ce maximum comme valeur maximale de la fonction d'autocorrélation dans ce segment.

10. Système selon la revendication 9, dans lequel le moyen d'interpolation est un filtre de Farrow.

11. Système selon la revendication 9, dans lequel la courbe lisse continue qui est utilisée par le moyen d'ajustement de courbe est un courbe parabolique.

12. Système selon l'une quelconque des revendications 8 à 11, dans lequel la référence temporelle est une référence temporelle dérivée de GPS.

# Fig. 1

## Fig. 2

## Fig. 3

# Fig. 4

# Fig. 5

## Zoom in ACF maximum number 4

Signal parameters: bandwidth = 20 kHz; sampling rate = 24 kHz; oversampling = 1.25; time resolution = 40 µs; interpolated time resolution = 4 µs

# Fig. 6

## Fig. 7

# Fig. 8

# Fig. 9

**Fig. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5512908 A, Herrick
- US 5327144 A, Stilp
- US 20080167051 A, Cheok
- US 20080089393 A, Opperman
- US 2010007558 A1